# EUROPÄISCHE PATENTSCHRIFT

(11) **EP 1 826 456 B1**
(45) Veröffentlichungstag und Bekanntmachung des Hinweises auf die Patenterteilung: **23.07.2008**
(21) Anmeldenummer: 06003950.0
(22) Anmeldetag: 27.02.2006
(51) Int. Cl.: F16G 13/16, E02F 9/22, E02F 3/20

(54) **Versorgungsband**
Supply belt
Courroie d'alimentation

(43) Veröffentlichungstag der Anmeldung: 29.08.2007
(73) Patentinhaber: BAUER Maschinen GmbH, 86529 Schrobenhausen (DE)
(72) Erfinder: Arzberger, Maximilian, 86568 Igenhausen (DE); Herrmann, Christian, 85250 Altomünster (DE)
(74) Vertreter: Wunderlich, Rainer

(56) Entgegenhaltungen:
- EP-A- 0 708 270
- DE-A1- 19 840 012
- DE-C1- 4 119 211
- US-A1- 2005 056 333

## Beschreibung

Die Erfindung betrifft ein Versorgungsband, insbesondere zur Versorgung eines Erdbearbeitungsgerätes, gemäß dem Oberbegriff des Anspruchs 1, mit mindestens einer Versorgungsleitung, und mit mindestens einer Segmentkette, welche aus einer Vielzahl von Segmenten gebildet ist, welche auf einem Führungsseil aufgereiht sind. Außerdem sind Halterungen vorgesehen, welche beabstandet zueinander an Segmenten der Segmentkette befestigt sind und zum Halten der mindestens einen Versorgungsleitung entlang der Segmentkette ausgebildet sind.

Derartige Versorgungsbänder werden beispielsweise zur Energieversorgung von Schlitzwandfräsen verwendet und werden auch als Energiebänder bezeichnet. Hierbei ist auf einem Trägergerät eine entsprechende Vorhaltetrommel vorgesehen. Auf diese Trommel ist das Versorgungsband aufgewickelt und wird beim Abteufen der Schlitzwandfräse abgewickelt, um das Versorgungsband nachzuführen.

Zur Tiefensteuerung der Fräse ist weiter mindestens ein Tragseil vorgesehen. Für dieses Tragseil befindet sich am Trägergerät üblicherweise eine weitere Windentrommel. Die beiden Trommelwinden, für das Versorgungsband und für das Tragseil, müssen beim Betrieb der Schlitzwandfräse synchrongesteuert werden, um ungewollte Kräfte auf die Schlitzwandfräse zu verhindern. Diese Kräfte könnten zu einem Verkippen der Fräse führen, wodurch die entstehende Schlitzwand nicht an der gewünschten Stelle erstellt werden könnte.

Ein derartiges Versorgungsband für eine Schlitzwandfräse ist beispielsweise aus DE 41 19 211 C1 bekannt.

Der Erfindung liegt die **Aufgabe** zugrunde, ein Versorgungsband anzugeben, welches den Betrieb und die Steuerung eines Erdbearbeitungsgerätes vereinfacht.

Diese Aufgabe wird durch ein Versorgungsband mit den Merkmalen des Anspruchs 1 gelöst.

Bevorzugte Ausführungsformen sind in den abhängigen Ansprüchen, der Beschreibung sowie den Figuren und deren Erläuterungen angegeben.

Ein erfindungsgemäßes Versorgungsband ist dadurch gekennzeichnet, dass mindestens ein Tragseil vorgesehen ist, welches zusätzlich zu dem Führungsseil entlang der Segmentkette in Aufnahmen der Segmentkette geführt ist.

Ein Grundgedanke der Erfindung besteht darin, das Tragseil auf dieselbe Trommel wie das Versorgungsband aufwickeln zu können. Dies bietet gegenüber der herkömmlichen Vorrichtung mit zwei getrennten Trommeln für das Versorgungsband und für das Tragseil den Vorteil, dass die Tragwinde für das Tragseil entfallen kann. Außerdem ist ein separater Antrieb für die Tragwinde nicht mehr notwendig.

Zusätzlich ergibt sich der Vorteil, dass eine synchrone Ansteuerung des Antriebes der Winde für das Tragseil und des Antriebes der Winde für das Versorgungsband nicht mehr nötig sind. Die synchrone Steuerung erfolgt sozusagen automatisch, da sich das Tragseil und das Versorgungsband auf derselben Windentrommel befinden.

Ein weiterer Vorteil des erfindungsgemäßen Versorgungsbands ist eine Gewichtsersparnis am Trägergerät der Schlitzwandfräse. Da nur noch eine Windentrommel und ein Antrieb für das Tragseil und das Versorgungsband benötigt werden, verringert sich auch das Gesamtgewicht des Trägergerätes.

Grundsätzlich ist es möglich, das Versorgungsband mit beliebig vielen Segmentketten auszustatten, beispielsweise mit nur einer zentralen Segmentkette, an der die Halterungen mittig angebracht sind. Es hat sich aber vorteilhaft herausgestellt, wenn zwei Segmentketten mit je einem Tragseil vorgesehen sind und die Halterungen als Querstege ausgebildet sind, welche sich zwischen den beiden Segmentketten erstrecken und diese miteinander verbinden. Bei mehreren Tragseilen ist es möglich, ein an den Tragseilen befestigtes Erdbearbeitungsgerät, beispielsweise eine Schlitzwandfräse, besonders stabil auf einer vertikalen Achse auszurichten bzw. diese Achse zu beeinflussen.

Besonders bevorzugt ist hierbei, wenn die Halterungen als Querstege ausgebildet sind, welche sich zwischen den beiden Segmentketten erstrecken und diese miteinander verbinden. Hierdurch wird eine einfache Befestigung der Querstege an den Segmentketten ermöglicht. Die Versorgungsleitungen befinden sich bevorzugt zwischen den beiden Segmentketten, so dass sie besonders effektiv von den einzelnen Querstegen gehalten werden können. Durch das Vorsehen von mindestens zwei Segmentketten ist das Versorgungsband besonders stabil gegen ungewollte Verdrehungen gelagert.

Vorteilhafterweise wird das Versorgungsband auf einer Windentrommel derartig aufgewickelt, dass das Versorgungsband übereinander gelagert ist. Also so, dass die Segmentkette übereinander abgelegt wird. In einer bevorzugten Ausführungsform weisen die einzelnen Segmente zum Auf- und Abrollen der Segmentkette ballige Seitenflächen auf. Durch die balligen Seitenflächen der einzelnen Segmente können diese beim Auf- bzw. Abrollen der Segmentketten von bzw. auf die Windentrommel auf den Segmenten der jeweils darunter zu liegen kommenden Segmentkette reibungsarm abrollen. Hierdurch wird der Verschleiß während des Auf- und Abrollens der Segmentkette verringert. Außerdem sollten die einzelnen Segmente, welche auch als Abstandshalter bezeichnet werden können, ausreichend stabil ausgelegt sein, um Pressungen aus dem Tragseil aufnehmen zu können. Hierzu sind diese massiv aus Metall, z.B. aus Stahl oder einer Aluminiumlegierung, ausgebildet.

Für eine Führung beim Aufrollen des Versorgungsbandes ist grundsätzlich eine entsprechend dimensionierte Windentrommel ausreichend. Es hat sich aber als vorteilhaft herausgestellt, wenn die Segmente Führungen zum gegenseitigen Führen aufweisen. Dies kann durch entsprechende Formschlusselemente ermöglicht werden. So können an einer Oberseite der Segmente Führungsnuten und an einer Unterseite komplementäre Führungsnasen vorgesehen sein. Durch diese Ausführung der einzelnen Segmente wird ein geführtes Aufrollen erleichtert. Es wird erreicht, dass die einzelnen Segmente eines Versorgungsbandes übereinander zu liegen kommen. Hiermit werden die Versorgungsleitungen nicht durch eventuell falsch aufliegende Segmente gequetscht. Das gegenseitige Quetschen der Versorgungsleitungen wird durch die Querstege verringert.

Bei einer vorteilhaften Ausführungsform sind die Aufnahmen in den Segmenten für das Tragseil als Durchgangsbohrungen ausgebildet. Zwar sind grundsätzlich auch andere Formen als Aufnahme geeignet, bei Durchgangsbohrungen ist aber vorteilhaft, dass das Tragseil beim Aufrollen an einer vordefinierten Position zu liegen kommt. Die Durchgangsbohrungen sind vorzugsweise doppelkonusförmig ausgebildet, wobei zur Vermeidung von Kantenpressungen die Innenflächen ballig oder konvex ausgeformt sind. Außerdem bieten Durchgangsbohrungen mit einem entsprechenden Durchmesser ausreichend Schutz vor Reibungsverschleiß in Kombination mit äußerst guten Führeigenschaften. Zudem können die hohen Seilkräfte beim Aufrollen zuverlässig aufgenommen werden.

Die Versorgungsleitungen können beispielsweise als Elektroleitungen, Elektronikleitungen, Steuerleitungen und/oder Förderleitungen ausgebildet sein. Zur Versorgung eines Erdbearbeitungsgerätes werden meist Hydraulikleitungen verwendet. Grundsätzlich können aber beim erfindungsgemäßen Versorgungsband jegliche Arten von Leitungstypen verwendet werden, da sie sowohl von Zug als auch von Druck weitgehend entlastet sind, also keinen großen Belastungen ausgesetzt sind. Die Förderleitungen können zur Förderung von Fluiden oder Suspensionen in beide Richtungen, d.h. in Richtung Schlitzwandfräse oder in Richtung Trägergerät ausgelegt sein.

Grundsätzlich können die Versorgungsleitungen eine Dicke aufweisen, die entsprechend ihrer Versorgungsart dimensioniert ist. Besonders vorteilhaft ist aber, wenn die mindestens eine Versorgungsleitung eine Dicke aufweist, welche eine Abstandshöhe der Segmente nicht übersteigt. Durch diese Dimensionierung wird ermöglicht, dass es im aufgerollten Teil des Versorgungsbandes schwer zu Quetschungen der einzelnen Versorgungsleitungen kommt. Dadurch dass die Segmente eine Mindestabstandshöhe aufweisen, die den Mindestabstand zur nächsten Versorgungsbandlage definiert, wird erreicht, dass die einzelnen Versorgungsleitungen sich gegenseitig nicht abdrücken können.

Das Ende des Versorgungsbandes, bzw. des oder der Tragseile kann beliebig an dem Erdbearbeitungsgerät befestigt sein. Besonders vorteilhaft ist es aber, wenn zumindest an einem Ende des Versorgungsbandes ein Abschlusselement vorgesehen ist, an dem das mindestens eine Tragseil gelenkig befestigt ist. Durch die gelenkige Befestigung des mindestens einen Tragseils an einem Abschlusselement, an dem das Erdbearbeitungsgerät befestigt sein kann, wird erreicht, dass Belastungen von dem Erdbearbeitungsgerät, wie beispielsweise Kipp- oder Biegemomente, sowie Querkräfte nicht, oder zumindest nur teilweise auf das Versorgungsband mit den Tragseilen übertragen werden.

Prinzipiell ist es möglich, die Versorgungsleitungen direkt an die entsprechenden Versorgungsorte an einem Erdbearbeitungsgerät zu führen. Besonders vorteilhaft ist es aber, wenn die mindestens eine Versorgungsleitung an einer Anschlussleiste mündet, welche an einem Geräterahmen oder an dem Abschlusselement angeordnet ist. Anschließend an das Abschlusselement können dann beispielsweise feste Rohrleitungen vorgesehen sein. Rohrleitungen bieten im Bereich des Erdbearbeitungsgerätes einen besseren Schutz der Leitungen, da sie meist stabiler sind als Schlauchleitungen, die im Versorgungsband verwendet werden können. Auch bietet die Anschlussleiste einen festen Anschlusspunkt der Leitungen aus dem Versorgungsband an das Abschlusselement, an dem sich ein Erdbearbeitungsgerät befinden kann. Dadurch ist einfaches Austauschen eines Erdbearbeitungsgerätes, beispielsweise der Schlitzwandfräse bzw. des Versorgungsbandes möglich.
Besonders vorteilhaft ist hierbei, wenn das Abschlusselement mindestens eine Befestigungseinrichtung zur Befestigung eines Arbeitsgerätes aufweist. Durch diese Befestigungseinrichtung für ein Arbeitsgerät, beispielsweise eine Schlitzwandfräse, wird ein Austausch des Arbeitsgerätes oder des Versorgungsbandes besonders einfach durchführbar. Ist diese Befestigung gelenkig ausgelegt, so wird die Übertragung von Belastungen wie von Kipp- oder Biegemomenten, sowie von Querkräften auf das Versorgungsband von dem Arbeitsgerät verringert bzw. komplett vermieden.

Besonders vorteilhaft ist es, wenn die Querstege mit dem Tragseil fest verbunden sind. Bei zwei Segmentketten mit jeweils einem Tragseil entsteht so ein Aufbau ähnlich einer Leiter mit den Querstegen als Sprossen. Somit ist es möglich, wenn die Versorgungsleitungen, beispielsweise Schläuche, an den Querstegen befestigt sind, dass das Gewicht der Schläuche komplett vom Tragseil getragen wird. Auch können die Schläuche größtenteils zugentlastet werden. Die Schläuche können beispielsweise durch Schellen mit einer geringen Bewegungsmöglichkeit an den Querstegen befestigt sein. Hierbei bieten sich zwei Schellen an, eine an der Vorsorgungsleitung über einem Quersteg, eine unter dem Quersteg.

Besonders bevorzugt ist, wenn ein Erdbearbeitungsgerät, insbesondere eine Schlitzwandfräse, mit einem erfindungsgemäßen Versorgungsband ausgerüstet ist. Hierbei können die beschriebenen Vorteile besonders einfach auf das Erdbearbeitungsgerät angewendet werden.

Grundsätzlich kann die Winde mit der Windentrommel für das Versorgungsband und das Tragseil an einem beliebigen geeigneten Ort angebracht sein. Besonders bevorzugt ist es, wenn eine Winde mit Windentrommel für das Versorgungsband an dem Erdbearbeitungsgerät bzw. dessen Trägergerät vorgesehen ist. Hierdurch wird die Mobilität des Erdbearbeitungsgerätes verbessert, da nicht separat eine Winde mit Windentrommel aufgebaut werden muss, bevor die eigentliche Verwendung begonnen werden kann. Eine separate Winde mit Windentrommel kann aber in beengten Platzverhältnissen ebenfalls vorteilhaft eingesetzt werden.

Bei einem besonders bevorzugten Erdbearbeitungsgerät ist das Abschlusselement als Wippe ausgebildet, welche schwenkbar an einem oberen Anlegepunkt eines Geräterahmens angeordnet ist. Durch die schwenkbare Anbindung des Geräterahmens an die Wippe wird eine Übertragung von Belastungen in Richtung des Versorgungsbandes reduziert. Hierbei ist es besonders vorteilhaft, wenn die Anschlussleiste für die Versorgungsleitung oder Leitungen flexibel bzw. schwenkbar ausgelegt ist, um Belastungen abzufangen und nicht an das weitere Versorgungsband weiterzugeben.

Die Erfindung wird weiter anhand eines bevorzugten Ausführungsbeispiels erläutert, welches schematisch in den Zeichnungen dargestellt ist. In den Zeichnungen zeigen:
- Fig. 1: eine teilweise geschnittene Seitenansicht eines erfindungsgemäßen Versorgungsbandes;
- Fig. 2: eine perspektivische Ansicht eines Segments einer Segmentkette des erfindungsgemäßen Versorgungsbandes;
- Fig. 3: eine Seitenansicht eines Segmentes einer Segmentkette eines erfindungsgemäßen Versorgungsbandes; und
- Fig. 4: eine teilweise geschnittene Seitenansicht einer Schlitzwandfräse mit Trägergerät und erfindungsgemäßem Versorgungsband.

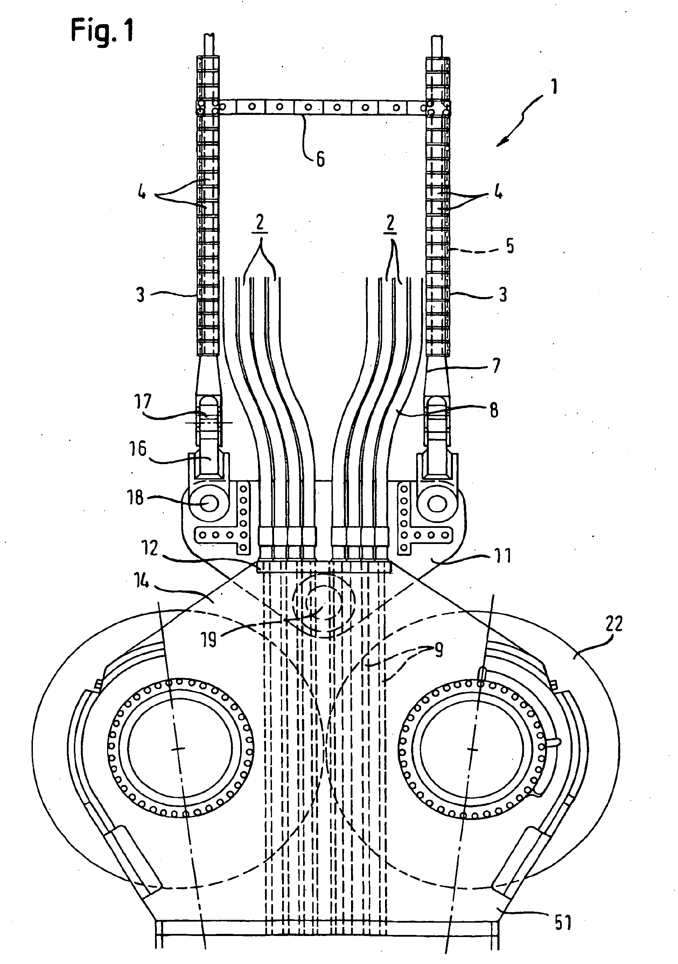

In Figur 1 ist eine geschnittene Seitenansicht eines erfindungsgemäßen Versorgungsbandes 1 im Bereich der Befestigung an einem Geräterahmen 14 einer Schlitzwandfräse 51 dargestellt. Das Versorgungsband 1 ist in diesem Ausführungsbeispiel aus zwei im Wesentlichen parallel verlaufenden Segmentketten 3 ausgebildet. Zwischen diesen Segmentketten 3 sind die einzelnen Versorgungsleitungen 2 vorgesehen. Hierbei kann es sich beispielsweise um hydraulische oder elektrische Energieleitungen handeln. Ebenso können hierbei Steuerleitungen vorgesehen sein. Wird das erfindungsgemäße Versorgungsband 1 zur Versorgung einer Schlitzwandfräse 51 verwendet, so kann es vorteilhaft sein, weitere Versorgungsleitungen 2 zur Zuleitung von beispielsweise Stützsuspension in den Frässchlitz vorzusehen. Ebenso ist es möglich, Leitungen zum Abtransport von abgefrästen Erdboden vorzusehen.

Im Abstand von einigen Metern, insbesondere ein bis zwei Metern, sind zwischen den zwei Segmentketten 3 als Querstege 6 ausgebildete Halterungen vorgesehen. Diese Querstege 6 weisen Befestigungen für die Versorgungsleitungen 2 auf. Jede Segmentkette 3 besteht aus einer Vielzahl von Segmenten 4, die im Wesentlichen gleich ausgeführt sind. Innerhalb der Segmente 4 verläuft jeweils ein Führungsseil 5 und ein Tragseil 7. Das Tragseil 7 dient hauptsächlich zur Aufnahme des Gewichts der daran befestigten Schlitzwandfräse 51. Das hier zusätzlich verwendete Führungsseil 5 ist nicht zwingend erforderlich. Es kann vorzugsweise am ersten und letzten Segment der Segmentkette 3 befestigt sein und stabilisiert die Segmentkette 3.

Wenn das Tragseil 7 mit dem restlichen Versorgungsband 1 auf einer Windentrommel 57 aufgewickelt wird, ist das Auf- und Abwickeln synchron. Durch das Gewicht der Schlitzwandfräse 1 kann sich das Tragseil 7 dehnen. Dies kann auch durch eine Zugkraft beim Ziehen der Fräse aus dem gefüllten Schlitz auftreten. Um die dadurch entstehende unterschiedliche Länge des Tragseils 7 und des restlichen Versorgungsbandes zu kompensieren, ist es beispielsweise möglich, die einzelnen Querstege 6 fest mit dem Tragseil 7 zu verbinden. So wird eine Längung des Tragseils 7 direkt auf das restliche Versorgungsband 1 übertragen. Zusätzlich verteilt sich die Längung über die gesamte Länge des Versorgungsbandes, so dass die Längung nicht zu zusätzlichen Belastungen bei Versorgungsleitungen führt. Zu diesem Zweck können die Versorgungsleitungen 2 mit einem gewissen Spielraum in Richtung der Länge des Versorgungsbandes an den einzelnen Querstegen 6 befestigt werden.

In der hier dargestellten Ausführungsform sind die Versorgungsleitungen 2 im Bereich des Versorgungsbandes 1 als einzelne Schläuche 8 vorgesehen. Das Versorgungsband 1 endet an dem hier dargestellten Ende mit einem im wesentlichen dreieckigen Abschlusselement 11 in Form einer Wippe. Am Geräterahmen 14 ist eine Anschlussleiste 12 vorgesehen, an der die Verbindung der Schläuche 8 der Versorgungsleitungen 2 mit festen Leitungen 9 erfolgt. Die Leitungen 9 sind als Bohrungen im Geräterahmen 14 ausgebildet und führen beispielsweise zu einer Antriebseinheit 55 einer Schlitzwandfräse 51.

Die Wippe 11 ist gelenkig mit Halteelementen 16 befestigt, die jeweils zwei Augen aufweisen. Diese Halteelemente 16 sind an beiden Segmentketten 3 vorgesehen und sind an dem Tragseil 7 zur Aufnahme der Gewichtskraft der Schlitzwandfräse 51 befestigt. Zusätzlich kann auch das Führungsseil 5 an den Halteelementen 16 angebracht sein. Die Tragseile 7 sind im oberen Auge 17 der Halteelemente 16 gelenkig angebracht, so dass ein Schwenken in einer horizontalen Ebene ermöglicht wird.

Die Halteelemente 16 selbst sind mit ihrem zweiten Auge wiederum gelenkig an der Wippe 11 befestigt. Diese Befestigung ist derart, dass ein Schwenken jeweils in einer Achse, die senkrecht zur Zeichnungsebene steht, möglich ist. So ist das Versorgungsband 1 in Bezug auf die Wippe 11 um zwei Achsen, welche insbesondere senkrecht aufeinander stehen, schwenkbar aufgehängt.
Die Befestigung der Schlitzwandfräse 51 erfolgt über den Geräterahmen 14, der an einer Halterung 19, wiederum schwenkbar mit Gelenkbolzen befestigt ist. Ziel der verschiedenartig ausgeführten gelenkigen Befestigung des Versorgungsbandes 1 über die Wippe 11 mit der Schlitzwandfräse 51 ist, dass die während des Betriebes der Schlitzwandfräse 51 auftretenden Belastungen wie Kipp- oder Biegemomente, sowie Querkräfte nicht oder nur in geringem. Maße an das Versorgungsband 1 weitergegeben werden können.

Die hier teilweise dargestellte Schlitzwandfräse 51 ist eine sogenannte Quattrofräse, die vier Fräsräder 22 aufweist, wobei hier nur die zwei oberen Fräsräder 53 gezeigt sind. Derartige Schlitzwandfräsen werden im sogenannten CSM-Verfahren (Cutter Soil Mixing) betrieben, wobei ein Großteil des gelösten Erdbodens zerkleinert wird und für das Erstellen der Schlitzwand im Boden verbleibt. Bei einer derartigen CSM-Fräse entfällt ein Abförderschlauch für das Bohrgut. Die zusätzlich notwendige Suspension wird über einen der Schläuche des Versorgungsbandes zugeführt. Mit dem nicht benötigten Förderschlauch entfällt auch die Förderschlauchaufrollung samt Antrieb und Steuerung. Grundsätzlich ist es aber auch möglich, das erfindungsgemäße Versorgungsband 1 mit anderen Schlitzwandfräsverfahren zu verwenden.

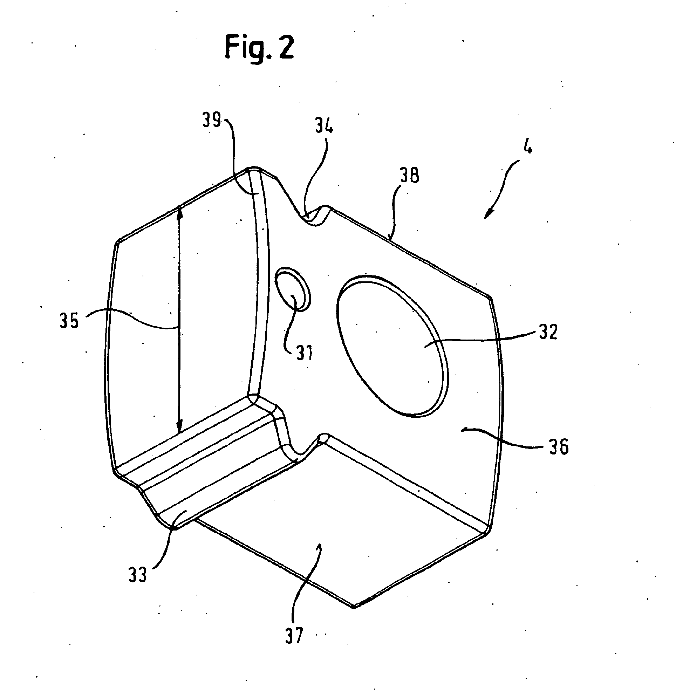

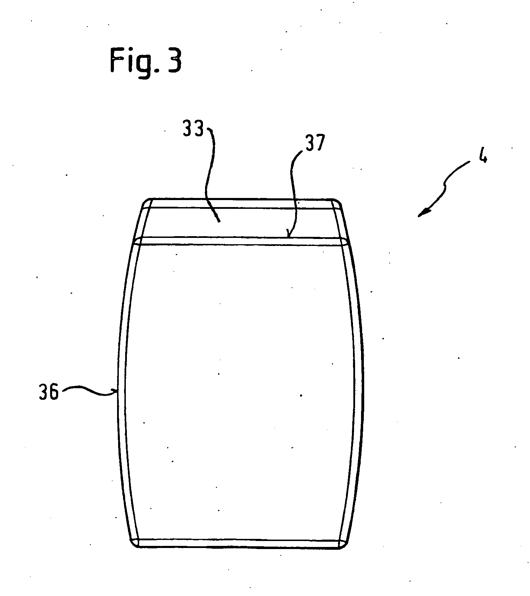

In den Figuren 2 und 3 ist ein Segment 4 der Segmentkette 3 dargestellt. Diese Segmente bestehen beispielsweise aus einem Metall. Das Segment weist zwei Durchgangsbohrungen 31 und 32 auf. Die größere Durchgangsbohrung 32 ist für das Tragseil 7 vorgesehen, welches das Gewicht des Erdbearbeitungsgerätes 51 aufnimmt. Die kleinere Durchgangsbohrung 31 dient zur Durchführung des Führungsseils 5. Dieses Führungsseil 5 soll ein Verkippen der Segmente 4 beim Auf- und Abrollen verhindern, und dafür sorgen, dass die einzelnen Segmente 4 exakt übereinander zu liegen kommen. Hierfür ist zusätzlich an der Unterseite 37 eine Führungsnase 33 vorgesehen. An der Oberseite 38 ist eine zu der Führungsnase 33 komplementäre Führungsnut 34 ausgebildet. Beim Aufwickeln des Versorgungsbandes 1 dienen diese Nase und die Nut dazu, dass sich die einzelnen Wicklungen des Versorgungsbandes 1 exakt übereinander befinden. Neben der Aufnahme des Führungs- 5 und des Tragseils 7 dienen die Segmente 4 auch dafür, dass sich die Versorgungsleitungen 2 im aufgewickelten Zustand nicht gegenseitig quetschen. Hierfür sollten die Versorgungsleitungen eine maximale Höhe der Abstandshöhe 35 eines Segmentes 4 nicht überschreiten.

Um einen Verschleiß der beispielsweise aus einer festen Aluminiumlegierung bestehenden Segmente beim Aufrollen zu minimieren, ist vorgesehen, dass zumindest die Seitenflächen 36 eine ballige Form aufweisen. Hierdurch können die einzelnen Segmente 4 bzw. deren Oberflächen besser aufeinander abrollen und ein Verschleiß durch Gleitreibung wird verhindert. Des Weiteren sind die Kanten 39 des Segmentes 4 abgerundet ausgebildet.

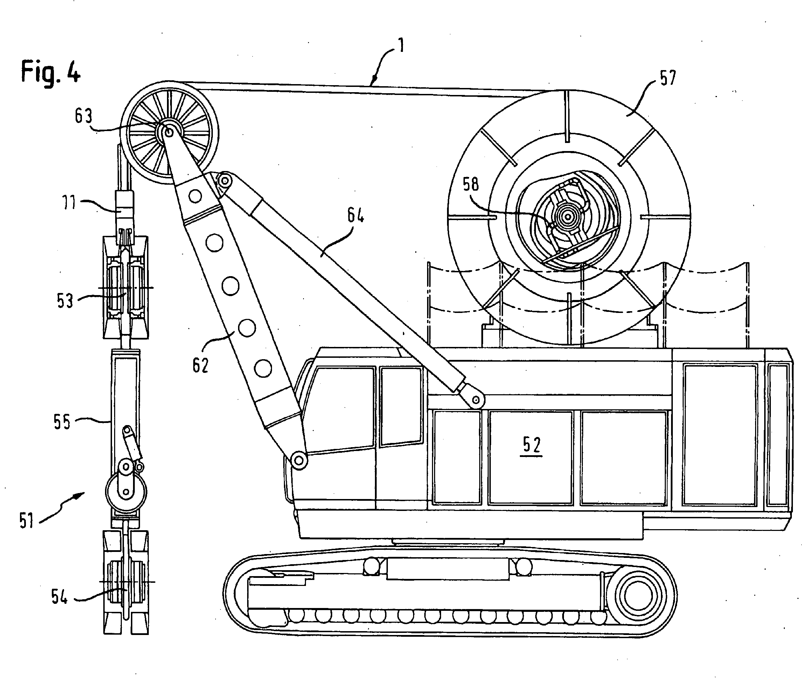

In Figur 4 ist eine Schlitzwandfräse 51 mit einem dazugehörigen Trägergerät 52 dargestellt. Das Trägergerät ist in Form eines Raupenfahrzeuges 52 ausgeführt. Auf dem Raupenfahrzeug 52 ist eine Windentrommel 57 mit nicht sichtbarem Antrieb vorgesehen. Die Windentrommel 57 dient zur Aufnahme und zur Steuerung des Versorgungsbandes 1 mit dem Tragseil 7. Die Versorgungsleitungen 2 sind an einem Ende durch Anschlüsse 58 an die jeweils entsprechende Versorgung, beispielsweise die Energieversorgung des Raupenfahrzeugs 52, angeschlossen.

Am anderen Ende des Versorgungsbandes 1 befindet sich eine Schlitzwandfräse 51, die über eine Wippe 11 mit dem Versorgungsband 1 verbunden ist. Die hier dargestellte Schlitzwandfräse 51 weist obere 53 und untere 54 Fräsräder auf. Zwischen diesen Fräsrädern befindet sich die Antriebseinheit 55, bis zu der die Versorgungsleitungen 2 des Versorgungsbandes 1 als Rohrleitungen geführt sind. Zur Ausrichtung der Schlitzwandfräse 51 ist an dem Raupenfahrzeug 52 ein Mast 62 mit einer Umlenkung 63 befestigt. Über diese Umlenkung 63 wird das Versorgungsband 1 in eine vertikale Richtung umgelenkt. Die Ausrichtung des Mastes 62 ist durch eine Verstelleinrichtung 64 möglich, die in diesem Ausführungsbeispiel hydraulisch ausgeführt ist. Durch die Verwendung des erfindungsgemäßen Versorgungsbandes 1 entfällt eine Windentrommeleinheit für das Tragseil 7. Da das Tragseil 7 und die restlichen Versorgungsleitungen 2 nun auf einer Windentrommel 57 bevorratet sind, entfällt auch die komplexe Synchronisation von zwei verschiedenen Winden mit deren Antrieben.

Durch das erfindungsgemäße Versorgungsband ist der Betrieb von Erdbearbeitungsgeräten besonders effizient möglich.

## Patentansprüche

1. Versorgungsband (1), insbesondere zur Versorgung eines Erdbearbeitungsgerätes (51), mit
- mindestens einer Versorgungsleitung (2),
- mindestens einer Segmentkette (3), welche aus einer Vielzahl von Segmenten (4) gebildet ist, welche auf einem Führungsseil (5) aufgereiht sind, und
- Halterungen, welche beabstandet zueinander an Segmenten (4) der Segmentkette (3) befestigt sind und zum Halten der mindestens einen Versorgungsleitung (2) entlang der Segmentkette (3) ausgebildet sind,
**dadurch gekennzeichnet ,**
**dass** mindestens ein Tragseil (7) vorgesehen ist, welches zusätzlich zu dem Führungsseil (5) entlang der Segmentkette (3) in Aufnahmen (31, 32) der Segmente (4) geführt ist.

2. Versorgungsband nach Anspruch 1,
**dadurch gekennzeichnet ,**
**dass** zwei Segmentketten (3) mit je einem Tragseil (7) vorgesehen sind, und
**dass** die Halterungen als Querstege (6) ausgebildet sind, welche sich zwischen den beiden Segmentketten (3) erstrecken und diese miteinander verbinden.

3. Versorgungsband nach Anspruch 1 oder 2,
**dadurch gekennzeichnet ,**
**dass** die Segmente (4) zum Auf- und Abrollen der Segmentkette (3) ballige Seitenflächen (36) aufweisen.

4. Versorgungsband nach einem der Ansprüche 1 bis 3,
**dadurch gekennzeichnet ,**
**dass** für ein geführtes Aufrollen die Segmente (4) an einer Seite Führungsnasen (33) und an einer gegenüberliegenden Seite dazu komplementäre Führungsnuten (34) aufweisen.

5. Versorgungsband nach einem der Ansprüche 1 bis 4,
**dadurch gekennzeichnet ,**
**dass** die Aufnahmen in den Segmenten (4) für das Tragseil (7) als Durchgangsbohrungen (31, 32) ausgebildet sind.

6. Versorgungsband nach einem der Ansprüche 1 bis 5,
**dadurch gekennzeichnet ,**
**dass** die mindestens eine Versorgungsleitung (2) als Elektroleitung, Hydraulikleitung, Steuerleitung und/oder Förderleitung ausgebildet ist.

7. Versorgungsband nach einem der Ansprüche 1 bis 6,
**dadurch gekennzeichnet ,**
**dass** die mindestens eine Versorgungsleitung (2) eine Dicke aufweist, welche eine Abstandshöhe (35) der Segmente (4) nicht übersteigt.

8. Versorgungsband nach einem der Ansprüche 1 bis 7,
**dadurch gekennzeichnet ,**
**dass** an zumindest einem Ende ein Abschlusselement (11) vorgesehen ist, an dem das mindestens eine Tragseil (7) gelenkig befestigt ist.

9. Versorgungsband nach Anspruch 8,
**dadurch gekennzeichnet ,**
**dass** die mindestens eine Versorgungsleitung (2) in einer Anschlussleiste (12) mündet.

10. Versorgungsband nach Anspruch 8 oder 9,
**dadurch gekennzeichnet ,**
**dass** das Abschlusselement (11) mindestens eine Befestigungseinrichtung zur Befestigung eines Arbeitsgerätes (51) aufweist.

11. Erdbearbeitungsgerät (51), insbesondere Schlitzwandfräse,
**dadurch gekennzeichnet ,**
**dass** ein Versorgungsband (1) nach einem der Ansprüche 1 bis 10 vorgesehen ist.

12. Erdbearbeitungsgerät nach Anspruch 11,
**dadurch gekennzeichnet ,**
**dass** eine Winde mit Windentrommel (57) für das Versorgungsband (1) vorgesehen ist.

13. Erdbearbeitungsgerät nach Anspruch 11 oder 12,
**dadurch gekennzeichnet ,**
**dass** ein Abschlusselement (11) des Versorgungsbandes (1) als eine Wippe ausgebildet ist, welche schwenkbar an einem oberen Anlenkpunkt eines Geräterahmens (14) angeordnet ist.

## Claims

1. Supply belt (1), in particular for the supply of a soil working device (51), comprising
- at least one supply line (2),
- at least one segmental chain (3) formed of a plurality of segments (4), which are lined up on a guide rope (5), and
- holders which are fixed in a mutually spaced manner on segments (4) of the segmental chain (3) and designed for holding the at least one supply line (2) along the segmental chain (3),
**characterized in that**
at least one supporting rope (7) is provided, which is guided in addition to the guide rope (5) along the segmental chain (3) in receiving spaces (31, 32) of the segments (4).

2. Supply belt according to claim 1,
**characterized in that**
two segmental chains (3) are provided with a supporting rope (7) each and **in that** the holders are designed as crosswebs (6) that extend between the two segmental chains (3) and connect these to each other.

3. Supply belt according to claim 1 or 2,
**characterized in that**
the segments (4) have crowned lateral faces (36) for winding up and unwinding the segmental chain (3).

4. Supply belt according to any one of claims 1 to 3,
**characterized in that** for a guided winding-up the segments (4) have guide projections (33) on one side and guide grooves (34) complementary thereto on an opposite side.

5. Supply belt according to any one of claims 1 to 4,
**characterized in that** the receiving spaces in the segments (4) for the supporting rope (7) are designed as through-holes (31, 32).

6. Supply belt according to any one of claims 1 to 5,
**characterized in that** the at least one supply line (2) is designed as an electric line, hydraulic line, control line and/or conveyer line.

7. Supply belt according to any one of claims 1 to 6,
**characterized in that** the at least one supply line (2) has a thickness which does not exceed a height of the spacing (35) of the segments (4).

8. Supply belt according to any one of claims 1 to 7,
**characterized in that** at least on one end a terminal element (11) is provided, on which the at least one supporting rope (7) is fixed in an articulated manner.

9. Supply belt according to claim 8,
**characterized in that**
the at least one supply line (2) ends in a connection bar (12).

10. Supply belt according to claim 8 or 9,
**characterized in that**
the terminal element (11) has at least one fixing device for fixing a working device (51).

11. Soil working device (51), in particular trench wall cutter,
**characterized in that**
a supply belt (1) according to any one of claims 1 to 10 is provided.

12. Soil working device according to claim 11,
**characterized in that**
a winch comprising a winch drum (57) is provided for the supply belt (1).

13. Soil working device according to claim 11 or 12,
**characterized in that**
a terminal element (11) of the supply belt (1) is designed as a rocker, which is pivotably arranged at an upper point of articulation of a device frame (14).

## Revendications

1. Tapis d'alimentation (1), en particulier pour alimenter un engin de travail du sol (51), avec
- au moins une conduite d'alimentation (2),
- au moins une chaîne (3) à segments qui est formée d'une pluralité de segments (4) qui sont juxtaposés sur un câble de guidage (5), et
- des supports qui sont fixés à distance les uns des autres sur des segments (4) de la chaîne à segments (3) et qui sont réalisés pour maintenir la conduite d'alimentation (3) au nombre d'au moins une le long de la chaîne à segments (3), ***caractérisé en ce qu*'**il est prévu au moins un câble porteur (7) qui, en plus du câble de guidage (5), est guidé le long de la chaîne (3) à segments dans des logements (31, 32) des segments (4).

2. Tapis d'alimentation selon la revendication 1,
***caractérisé***
***en ce que*** deux chaînes (3) à segments avec chacune un câble porteur (7) sont prévues, et
***en ce que*** les supports sont conformés en barres transversales (6) qui s'étendent entre les deux chaînes (3) à segments et les relient entre elles.

3. Tapis d'alimentation selon la revendication 1 ou 2, ***caractérisé en ce que*** les segments (4) présentent des surfaces latérales bombées (36) pour l'enroulement et le déroulement de la chaîne (3) à segments.

4. Tapis d'alimentation selon l'une quelconque des revendications 1 à 3, ***caractérisé en ce que**,* pour un enroulement guidé, les segments (4) présentent d'un côté des nez de guidage (33) et sur un côté opposé des rainures de guidage (34) complémentaires.

5. Tapis d'alimentation selon l'une quelconque des revendications 1 à 4, ***caractérisé en ce que*** les logements sont conformés sous forme de perçages traversants (31, 32) dans les segments (4) pour le câble porteur (7).

6. Tapis d'alimentation selon l'une quelconque des revendications 1 à 5, ***caractérisé en ce que*** la conduite d'alimentation (2) au nombre d'au moins une est conformée en conduite électrique, conduite hydraulique, conduite de commande et/ou conduite d'acheminement.

7. Tapis d'alimentation selon l'une quelconque des revendications 1 à 6, ***caractérisé en ce que*** la conduite d'alimentation (2) au nombre d'au moins une présente une épaisseur ne dépassant pas une hauteur d'espacement (35) des segments (4).

8. Tapis d'alimentation selon l'une quelconque des revendications 1 à 7, ***caractérisé en ce qu'***à au moins une extrémité est prévu un élément de fermeture (11) sur lequel le câble porteur (7) au nombre d'au moins un est fixé de manière articulée.

9. Tapis d'alimentation selon la revendication 8, ***caractérisé en ce que*** la conduite d'alimentation (2) au nombre d'au moins une débouche dans une barrette de raccordement (12).

10. Tapis d'alimentation selon la revendication 8 ou 9, ***caractérisé en ce que*** l'élément de raccordement (11) présente au moins un dispositif de fixation pour la fixation d'un appareil de travail (51).

11. Engin de travail du sol (51), en particulier fraise pour parois moulées, ***caractérisé en ce qu*'**un tapis d'alimentation (1) selon l'une quelconque des revendications 1 à 10 est prévu.

12. Engin de travail du sol selon la revendication 11, ***caractérisé en ce qu*'**un treuil avec tambour (57) de treuil est prévu pour le tapis d'alimentation (1).

13. Engin de travail du sol selon la revendications 11 ou 12, ***caractérisé en ce qu*'**un élément de raccordement (11) du tapis d'alimentation (1) est réalisé en bascule, qui est placée pivotante sur un point d'articulation supérieur d'un châssis (14) d'appareil.
